# EUROPÄISCHE PATENTSCHRIFT

(11) **EP 3 720 676 B1**
(45) Veröffentlichungstag und Bekanntmachung des Hinweises auf die Patenterteilung: **07.06.2023**
(21) Anmeldenummer: 18815158.3
(22) Anmeldetag: 04.12.2018
(51) Int. Cl.: B29C 44/44, B29C 44/34, B29C 35/08, B29C 33/02, H05B 3/14

(54) **VORRICHTUNG UND VERFAHREN ZUR HERSTELLUNG EINES PARTIKELSCHAUMSTOFFTEILS**
DEVICE AND METHOD FOR PRODUCING A PARTICLE FOAM PART
DISPOSITIF ET PROCÉDÉ DE FABRICATION D'UN ÉLÉMENT EN MOUSSE DE PARTICULES EXPANSÉES

(30) Priorität: 05.12.2017 DE 102017128895
(43) Veröffentlichungstag der Anmeldung: 14.10.2020
(73) Patentinhaber: Kurtz GmbH & Co. KG, 97892 Kreuzwertheim (DE)
(72) Erfinder: ROMANOV, Victor, 97877 Wertheim (DE); REUBER, Norbert, 97851 Bergrothenfels (DE)
(74) Vertreter: HGF
(86) Internationale Anmeldenummer: PCT/EP2018/083465
(87) Internationale Veröffentlichungsnummer: WO 2019/110579

(56) Entgegenhaltungen:
- DE-A1-102007 040 283
- DE-U1-202016 104 341

## Beschreibung

Die vorliegende Erfindung betrifft eine Vorrichtung zur Herstellung eines Partikelschaumstoffteils.

Aus der WO 2014/128214 A1 geht eine Vorrichtung und ein Verfahren zur Herstellung eines Partikelschaumstoffteils hervor. Hierbei werden Schaumstoffpartikel von einem Materialbehälter mittels einer Leitung zu einem Formwerkzeug gefördert, in dem die Schaumstoffpartikel zum Partikelschaumstoffteil unter Zuführung von Wärme thermoplastisch verschweißt werden. Die Wärmezuführung erfolgt hierbei mittels gesättigtem Trockendampf.

Weiterhin gibt es unterschiedliche Versuche und Entwicklungen, die Wärme mittels elektromagnetischer Wellen zuzuführen, um Schaumstoffpartikel miteinander zu verschweißen. Beispielhaft wird auf die WO 2013/05081 A1, US 3,060,513, US 3,242,238, GB 1,403,326, WO 01/64414 A1 und die US 5,128,073 verwiesen.

Aus der WO 2014/128214 A1 ist es auch bekannt, als Formwerkzeug ein so genanntes Crackspalt-Formwerkzeug zu verwenden, dessen Formraum ein variables Volumen aufweist. Bei einem solchen Crackspalt-Formwerkzeug werden zwei Formhälften, die einen Formraum begrenzen, zunächst mit einem vorbestimmten Abstand zueinander angeordnet. In dieser Crack-Spalt-Stellung wird das Formwerkzeug mit Schaumstoffpartikeln gefüllt. Danach werden die Formhälften des Crackspalt-Formwerkzeuges ein Stück zusammengedrückt, wodurch die darin befindlichen Schaumstoffpartikel komprimiert werden. In diesem komprimierten Zustand werden die Schaumstoffpartikel miteinander verschweißt.

Die DE 20 2004 009 742 U1 offenbart ein beheizbares Werkzeug für eine Kunststoffschmelze oder eine Metallschmelze verarbeitende Vorrichtung, welches als Heizelement einen elektrisch leitenden Keramikkörper aufweist.

In der EP 2 181 080 B1 ist eine Heizeinrichtung für eine Spritzgießmaschine beschrieben, mit einer elektrisch leitfähigen Keramik, welche eine wendelförmige Leitungsstruktur aufweist.

Diese wendelförmige Leitungsstruktur wird dadurch ausgebildet, dass in dem Keramikköper Schlitze ausgebildet sind und der gesamte Keramikkörper an seiner Oberfläche mittels einer Säure geätzt wird, so dass im Bereich der Oberfläche des Keramikkörpers elektrisch leitfähige Vernetzungsstrukturen aufgelöst werden. Der Keramikkörper besteht dann aus der wendelförmigen Leitungsstruktur, welche von elektrisch isolierender Keramik umgeben ist.

Aus der DE 20 2016 104 341 U1 geht eine Vorrichtung gemäß dem Oberbegriff des Anspruchs 1 und ein Verfahren gemäß dem Oberbegriff des Anspruchs 10 hervor. Die Druckschrift offenbart ein Formwerkzeug aus Keramik, das eine Heizeinrichtung in Form von Heizdrähten aufweisen kann.

Der Erfindung liegt die Aufgabe zugrunde, eine Vorrichtung und ein Verfahren zur Herstellung eines Partikelschaumstoffteils zu schaffen, mit welchen großvolumige oder großflächige Partikelschaumstoffteile mit hoher Qualität und insbesondere hoher Oberflächengüte hergestellt werden können.

Die Aufgabe wird durch eine Vorrichtung und durch ein Verfahren gemäß den unabhängigen

Patentansprüchen gelöst. Vorteilhafte Ausgestaltungen der Erfindung sind in den jeweiligen Unteransprüchen angegeben.

Eine erfindungsgemäße Vorrichtung zur Herstellung eines Partikelschaumstoffteils umfasst ein Formwerkzeug zum Begrenzen eines Formraumes zur Aufnahme von Schaumstoffpartikeln und eine Heizeinrichtung zum Verschweißen der Schaumstoffpartikel zu einem Partikelschaumstoffteil. Die Vorrichtung zeichnet sich dadurch aus, dass die Heizeinrichtung einen Keramikkörper mit einer integrierten Widerstandsheizleitung als auch einen Generator zum Beaufschlagen des Formraums mit elektromagnetischen Wellen umfasst.

Ein solcher Keramikkörper mit integrierter Widerstandsheizleitung kann auf sehr hohe Temperaturen erhitzt werden, da Keramik auf wesentlich höhere Temperaturen erhitzt werden kann als Kunststoffe. Zudem ist Keramik ein sehr guter Wärmeleiter. Hierdurch kann durch die Heizeinrichtung hindurch die Wärme aus dem Formwerkzeug schnell abgeleitet werden. Dies erlaubt die Herstellung von Partikelschaumstoffteilen mit sehr steilen Temperaturrampen, sowohl beim Erhitzen als auch beim Abkühlen derselben. Das Vorsehen eines Generators zum Beaufschlagen des Formraums mit elektromagnetischen Wellen erlaubt eine Erhitzung der Schaumstoffpartikel durch Absorption der elektromagnetischen Wellen, so dass die Schaumstoffpartikel im Formwerkzeug relativ gleichmäßig erhitzen. Hierdurch wird eine gleichmäßige Verschweißung des Schaumstoffpartikels erzielt. Andererseits kann die Oberfläche des herzustellenden Partikelschaumstoffteils durch die zusätzliche Zuführung von Wärme vom Keramikkörper zumindest bereichsweise an der Oberfläche zusätzlich erhitzt werden, so dass diese Oberfläche zur Ausbildung einer glatten Fläche mittels der vom Keramikkörper bereitgestellten Wärme aufgeschmolzen wird. Dies ist besonders bei großvolumigen, großflächigen Partikelschaumstoffteilen von Vorteil, welche somit mit einer sehr gleichmäßigen Verschweißung hergestellt werden können.

Die Heizeinrichtung, die sowohl einen mit einer integrierten Widerstandsheizleitung versehenen Keramikkörper als auch einen Generator zum Erzeugen elektromagnetischer Wellen umfasst, erlaubt zudem ein sehr schnelles Aufheizen und Abkühlen der Schaumstoffpartikel, wodurch mit einer solchen Vorrichtung ein hoher Durchsatz erzielt wird.

Die Widerstandsheizleitung ist aus leitenden oder halbleitenden Keramikkomponenten ausgebildet.

Vorzugsweise ist an den Keramikkörper ein Kühlkörper gekoppelt, welcher Kanäle aufweist, durch welche ein Kühlmedium geführt werden kann. Das Kühlmedium ist beispielsweise Wasser. Der Kühlkörper kann als Metallkörper ausgebildet sein. Der Kühlkörper kann jedoch auch ein zusätzlicher Keramikkörper oder ein Abschnitt des Keramikkörpers sein, in dem die Kanäle ausgebildet sind.

Das Formwerkzeug weist vorzugsweise zwei Formhälften auf, wobei an eine Formhälfte der Keramikkörper gekoppelt ist bzw. der Keramikkörper die eine Formhälfte ausbildet.

Die Formhälften können grundsätzlich aus einem beliebigen Material ausgebildet sein. Die Formhälfte, an welche der Keramikkörper gekoppelt ist, ist bevorzugt aus einem Material ausgebildet, welches gut Wärme leitet, wie zum Beispiel Metall oder Keramik. Die Verwendung von Metall hat den Vorteil, dass die Formhälfte, welche den Formraum begrenzt, mit herkömmlichen Fertigungsverfahren, wie zum Beispiel Fräsen, gefertigt werden kann. Zudem kann eine Formhälfte aus Metall, welche elektrisch leitend ist, als Kondensatorplatte zum Beaufschlagen des Formraumes mit elektromagnetischen Wellen eingesetzt werden. Wenn die Formhälfte aus einem nicht-elektrischen Material ausgebildet ist, dann ist eine separate Kondensatorplatte vorzusehen, um den Formraum mit elektromagnetischen Wellen zu beaufschlagen.

Grundsätzlich können auch beide Formhälften des Formwerkzeuges mit jeweils einem eine integrierte Heizleitung aufweisenden Keramikkörper versehen sein. Dies erlaubt ein schnelles Aufheizen an der gesamten Umfangsfläche des Formraumes der Schaumstoffpartikel.

Vorzugsweise ist jedoch die nicht an den Keramikkörper gekoppelte Formhälfte aus einem Kunststoffkörper ausgebildet und weist eine separate Kondensatorplatte auf. Der Kunststoffkörper kann aus Materialien mit unterschiedlicher Permittivität (Dielektrizitätskonstante) und/oder mit einer variierenden Dicke und/oder mit elektrisch leitenden Körpern versehen sein und/oder die Kondensatorplatte kann konturiert ausgebildet sein, um das elektrische Feld der elektromagnetischen Wellen zu formen. Durch geschickte Wahl der Kunststoffmaterialien mit unterschiedlicher Permittivität, können die elektrischen Feldlinien so geformt werden, dass eine gleichmäßige Feldstärke im gesamten Formraum vorhanden ist. Grundsätzlich wäre es denkbar, beide Formhälften aus Metall auszubilden und als Kondensatorplatten zu verwenden. Jedoch würde bei einem Partikelschaumstoffteil mit einer nicht-ebenflächigen Oberfläche derart unterschiedliche Feldstärken im Formraum erzeugt werden, dass eine gleichmäßige Verschweißung des Partikelschaumstoffteils erheblich beeinträchtigt würde. Die Kombination aus einer elektrisch leitenden Formhälfte und einer nicht-elektrisch leitenden Formhälfte ist daher bevorzugt, da hierdurch mit geringen Verlusten die Energie der elektromagnetischen Wellen in den Formraum eingebracht werden kann, da die eine Formhälfte unmittelbar den Formraum begrenzt, und durch die nicht-elektrisch leitende Formhälfte das elektrische Feld derart geformt werden kann, dass zuverlässig Partikelschaumstoffteile mit hoher Qualität herstellbar sind.

Vorzugsweise weist die elektrisch leitfähige Keramik metallähnliche Carbide (ZrC, TiC) oder Nitride (TiN, TaN) oder Siliziumcarbid, Borcarbid oder Titansuboxid auf. Diese Keramiken sind elektrisch leitend oder halbleitend. Diese elektrisch leitenden oder halbleitenden Keramikwerkstoffe können in an sich isolierenden Keramikwerkstoffen, wie zum Beispiel Siliziumnitrid (Si₃N₄) eingebettet sein oder verschiedene elektrisch leitende oder halbleitende Keramikkomponenten können zu einem keramischen Kompositmaterial verbunden sein, wie zum Beispiel Siliziumcarbid (SiC) und Borcarbid (B₄C).

Die elektrische Widerstandsheizleitung im Keramikkörper kann wie in der EP 2 181 180 B1 beschrieben hergestellt sein. Diesbezüglich wird auf die EP 2 181 180 B1 verwiesen. Die Widerstandsheizleitung kann jedoch auch durch Sintern von leitenden und nicht-leitenden Strukturen hergestellt werden.

Das Formwerkzeug ist vorzugsweise ein Crackspalt-Formwerkzeug. Bei einem solchen Crack-spalt-Formwerkzeug können die beiden Formhälften in eine Crackspaltstellung gebracht werden, in welcher Schaumstoffpartikel zugeführt werden können. Danach werden die Formhälften ein Stück zueinander bewegt, so dass die darin befindlichen Schaumstoffpartikel komprimiert werden. In einer solchen Endstellung des Formwerkzeuges werden dann die Schaumstoffpartikel durch Erhitzen verschweißt.

Nach einem weiteren Aspekt der vorliegenden Erfindung wird ein Verfahren zur Herstellung eines Partikelschaumstoffteils vorgesehen, bei dem ein Formraum mit Schaumstoffpartikeln gefüllt wird, die Schaumstoffpartikel zu einem Partikelschaumstoffteil verschweißt werden, das Partikelschaumstoffteil abgekühlt wird und das Formwerkzeug entformt wird.

Dieses Verfahren zeichnet sich dadurch aus, dass die Schaumstoffpartikel mittels eines Keramikkörpers mit einer integrierten Widerstandsheizleitung als auch durch Beaufschlagen mit elektromagnetischen Wellen erhitzt werden.

Vorzugsweise erfolgt das Heizen mittels des Keramikkörpers und durch Beaufschlagen mit elektromagnetischen Wellen gleichzeitig.

Die Schaumstoffpartikel können auf eine Temperatur von zumindest 150°C und insbesondere von zumindest 190°C und vorzugsweise von zumindest 200°C erhitzt werden. Hierdurch können Partikelschaumstoffteile aus Kunststoffmaterialien hergestellt werden, welche mit herkömmlichen Verfahren, bei welchen die Schaumstoffpartikel mittels Dampf verschweißt werden, nicht verschweißbar sind. Hierdurch können Partikelschaumstoffteile hergestellt werden, welche gegenüber entsprechenden Temperaturen von beispielsweise 150°C, 190°C oder 200°C stabil sind. Hierdurch können solche Partikelschaumstoffteile weiteren Verarbeitungsprozessen, wie zum Beispiel einem Lackieren, unterzogen werden, bei welchen entsprechend hohe Temperaturen auftreten.

Mit diesem Verfahren können Schaumstoffpartikel aus Polyether-Block-Amid (ePEBA), Polyethylen (ePE), Polyurethan (ePU) oder Polyethylenterephthalat (ePET) zu Partikelschaumstoffteilen verschweißt werden. Diese Materialien absorbieren elektromagnetische Wellen, so dass sie direkt durch die elektromagnetischen Wellen erhitzt werden können. Weitere geeignete Materialien für Schaumstoffpartikel sind Polylactat (ePLA), Polyamid (ePA), Polybutylenterephthalat (ePBT) oder Polyester-Ether-Elastomer (eTPEE).

Diese Materialien weisen jeweils funktionelle Gruppen (z.B. Amidgruppe, Urethangruppe bzw. Estergruppe) auf, welche ein Dipolmoment besitzen oder im Molekül bewirken. Diese funktionellen Gruppen sind dafür verantwortlich, dass die Moleküle RF-Strahlung absorbieren. Daher sind auch andere thermoplastische Kunststoffe, welche derartige ein Dipolmoment verursachende funktionelle Gruppen aufweisen, geeignet mit RF-Strahlung verschweißt zu werden.

Mit diesem Verfahren können auch Schaumstoffpartikel auf Basis von ePP (expandierbares Polypropylen, PP) oder ePS (expandierbares Polystyrol) zu Partikelschaumstoffteilen verschweißt werden, indem sie mit einem Wärmeübertragungsmedium, wie zum Beispiel Wasser, versetzt oder benetzt werden. Das Wärmeübertragungsmedium absorbiert die elektromagnetischen Wellen und überträgt die Wärme auf die Schaumstoffpartikel.

Bei Materialien, wie zum Beispiel ePES (expandierbares Polyethersulfon) oder expandierbares Polyamid, ist der dielektrische Verlustfaktor und damit die Absorptionsfähigkeit von elektromagnetischen Wellen temperaturabhängig. Derartige Materialien können mit einem Wärmeübertragungsmedium zunächst vorerhitzt werden, bis sie ausreichend elektromagnetische Wellen absorbieren. Durch das Vorsehen der Zusatzheizung mittels des Keramikkörpers können die Schaumstoffpartikel jedoch zunächst elektrisch auf eine bestimmte Temperatur vorerhitzt werden, bis sie so heiß sind, dass sie ausreichend elektromagnetische Wellen absorbieren.

Die elektromagnetischen Wellen sind vorzugsweise elektromagnetische RF-Strahlung. Die elektromagnetische RF-Strahlung weist vorzugsweise eine Frequenz von zumindest 30 KHz bzw. zumindest 0,1 MHz, insbesondere zumindest 1 MHz bzw. zumindest 2 MHz und vorzugsweise zumindest 10 MHz auf.

Die elektromagnetische RF-Strahlung weist vorzugsweise eine Frequenz von maximal 300 MHz auf.

Der Generator zum Erzeugen von elektromagnetischen Wellen erzeugt vorzugsweise elektromagnetische Wellen mit einer Amplitude von zumindest 10³ V und insbesondere zumindest 10⁴ V. Handelsübliche Generatoren erzeugen RF-Strahlung mit einer Frequenz von 27,12 MHz.

Die elektromagnetischen Wellen können auch Mikrowellen sein.

Bei diesem Verfahren wird vorzugsweise eine Vorrichtung verwendet, wie sie oben erläutert ist.

Die Erfindung wird beispielhaft näher anhand der Zeichnungen erläutert. Die Zeichnungen zeigen in:
- Figur 1: schematisch eine Vorrichtung zur Herstellung eines Partikelschaumstoffteils, wobei ein Formwerkzeug dieser Vorrichtung in einer Crackspalt-Stellung angeordnet ist
- Figur 2: die Vorrichtung aus Figur 1, wobei das Formwerkzeug in einer Endstellung angeordnet ist, und
- Figur 3: schematisch eine Vorrichtung zur Herstellung eines Partikelschaumstoffteils, wobei ein Formwerkzeug mit zwei Formhälften vorgesehen ist, welche jeweils aus Kunststoff ausgebildet ist.

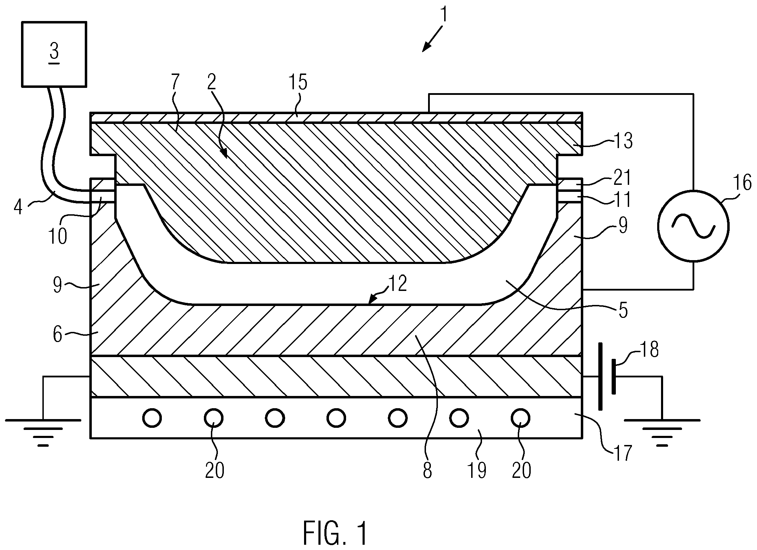

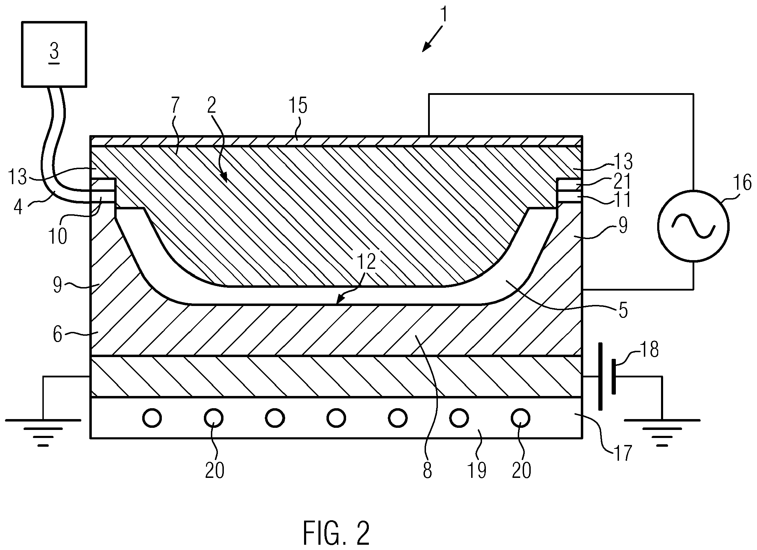

Eine Vorrichtung 1 zur Herstellung eines Partikelschaumstoffteils umfasst ein Formwerkzeug 2, einen Materialbehälter 3 und eine Leitung 4, die vom Materialbehälter 3 zum Formwerkzeug 2 führt. Über die Leitung 4 können dem Formwerkzeug 2 Schaumstoffpartikel zugeführt werden, die in einen vom Formwerkzeug 3 begrenzten Formraum 5 eingeführt werden. (Fig. 1, 2)

Das Formwerkzeug 2 ist aus zwei Formhälften 6, 7 ausgebildet, welche im Folgenden als Güteformhälfte 6 und Funktionsformhälfte 7 bezeichnet werden. In Figur 1 und 2 ist die Güteformhälfte 6 unterhalb der Funktionsformhälfte 7 angeordnet. Die Anordnung der Formhälften kann jedoch auch getauscht oder beliebig gedreht (zum Beispiel um 90° gedreht) sein.

Die Güteformhälfte 7 ist aus einem Metallkörper mit einer Bodenwandung 8 und einer umlaufenden Seitenwandung 9 ausgebildet. In der Seitenwandung 9 sind Durchgangsöffnungen 10, 11 ausgebildet, welche zum Zuführen der Schaumstoffpartikel in den Formraum 5 bzw. zum Entlüften des Formraumes 5 dienen. Eine Durchgangsöffnung 10 ist an die vom Materialbehälter 3 führende Leitung 4 angeschlossen.

Die Bodenwandung 8 und die Seitenwandung 9 begrenzen einen Hohlraum bzw. den Formraum 5, dessen Fläche als Gütefläche 12 ausgebildet ist. Im vorliegenden Ausführungsbeispiel ist die Gütefläche 12 gefräst und besitzt eine sehr glatte Oberfläche.

Die Funktionsformhälfte 7 ist ein Kunststoffkörper aus einem für elektromagnetische Wellen im Wesentlichen transparenten Kunststoff, wie z. B. Polytetrafluorethylen (PTFE), Polyethylen, insbesondere UHMWPE, Polyetherketon (PEEK) und andere für RF-Strahlung transparente Materialien. Der Kunststoffkörper kann ein monolithischer Kunststoffkörper sein. Er kann jedoch auch aus mehreren Kunststoffteilen, insbesondere aus mehreren Kunststoffschichten, ausgebildet sein. Insbesondere ist es zweckmäßig, die zur Güteformhälfte 6 weisende Oberfläche der Funktionsformhälfte 7 aus einer Kunststoffschicht auszubilden, welche elektromagnetische Wellen absorbiert und sich hierdurch erwärmt.

Die Funktionsformhälfte 7 bildet einen Stempel, der in den von der Güteformhälfte 6 begrenzten Hohlraum ein Stück eintauchen kann und bündig mit dem oberen bzw. freien Rand 21 der umlaufenden Seitenwandung 9 der Güteformhälfte 6 abschließt. Ein zwischen dem freien Rand der umlaufenden Seitenwandung 9 und der gegenüberliegenden, zu diesem Rand weisenden Fläche der Funktionsformhälfte 7 ausgebildeter Spalt ist kleiner als die üblicherweise dem Formraum 5 zugeführten kleinsten Schaumstoffpartikel, um sicherzustellen, dass aus dem Formraum 5 keine Schaumstoffpartikel entweichen können.

An der von der Güteformhälfte 6 weg weisenden Seite der Funktionsformhälfte 7 ist ein umlaufender Kragen 13 ausgebildet, welcher beim vollständigen Einführen der Funktionsformhälfte 7 die Güteformhälfte 6 am oberen Rand der Seitenwandung 9 der Güteformhälfte 6 aufliegt (Figur 2).

An der von der Güteformhälfte 6 weg weisenden Seite der Funktionsformhälfte 7 ist eine Kondensatorplatte 15 angeordnet. Im vorliegenden Ausführungsbeispiel ist die Kondensatorplatte 15 fest mit der Funktionsformhälfte 7 verbunden.

Die Kondensatorplatte 15 und die Güteformhälfte 6 sind jeweils mit einem Generator 16 zum Erzeugen elektromagnetischer Wellen verbunden. Der Generator 16 ist zum Erzeugen von RF-Strahlung mit einer Frequenz von 27,12 MHz ausgebildet.

An der von der Funktionshälfte 7 weg weisenden Seite der Güteformhälfte 6 ist ein Keramikkörper 17 mit einer integrierten Widerstandsheizleitung gekoppelt. Die Widerstandsheizleitung ist mit einer Stromquelle 18 verbunden, so dass der Keramikkörper elektrisch erhitzt werden kann und eine Widerstandsheizung bildet.

Auf der von der Güteformhälfte 6 weg weisenden Seite des Keramikkörpers 17 ist ein Kühlkörper 19 angeordnet, der mehrere Kühlkanäle 20 aufweist, welche von einem Kühlmedium, wie zum Beispiel Wasser, durchströmt werden können.

Nachfolgend wird der Betrieb der Vorrichtung 1 zur Herstellung eines Partikelschaumstoffteils erläutert.

Das Formwerkzeug 2 wird mit seinen beiden Formhälften 6, 7 zunächst in einer Crackspalt-Stellung (Figur 1) angeordnet, bei welcher die Funktionsformhälfte 7 bündig mit dem freien Rand 21 der Güteformhälfte 6 abschließt, jedoch die beiden Formhälften 6, 7 soweit voneinander beabstandet sind, dass die Durchgangsöffnungen 10, 11 frei in den Formraum 5 münden.

Aus dem Materialbehälter 3 werden Schaumstoffpartikel über die Leitung 4 dem Formraum 5 zugeführt.

Ist der Formraum 5 vollständig mit Schaumstoffpartikeln gefüllt, dann werden die beiden Formhälften 6, 7 in die Endstellung (Figur 2) zusammengedrückt. Hierzu wird eine Presse (nicht dargestellt) verwendet. In der Endstellung werden die beiden Formhälften 6, 7 mittels der Presse gehalten. In der Endstellung sind die beiden Durchgangsöffnungen 10, 11 von der Funktionsformhälfte abgedeckt und somit geschlossen.

Mittels des Generators 16 wird dann im Formraum 5 RF-Strahlung angelegt und gleichzeitig wird mittels der Stromquelle 18 der Keramikkörper 17 und damit die Güteformhälfte 6 erhitzt. Da der Keramikkörper 17 und die aus Metall ausgebildete Güteformhälfte 6 jeweils gute Wärmeleiter sind, können die an der Güteformhälfte 6 anliegenden Schaumstoffpartikel ähnlich schnell erhitzt werden, wie die sich im Inneren des Formraums 5 befindlichen Schaumstoffpartikel, welche vor allem aufgrund der elektromagnetischen Strahlung erhitzt werden. Man erhält somit eine sehr gleichmäßige Erhitzung an der Grenzfläche zur Güteformhälfte 6 und im Inneren des Formraumes 5. Hierdurch erhält man eine sehr homogene Verschweißung der Schaumstoffpartikel und ein Schaumstoffpartikelteil mit hoher Güte.

Zudem ist es möglich, dass die Güteformhälfte 6 kurzzeitig auf eine Temperatur erhitzt wird, die oberhalb der Temperatur der Schaumstoffpartikel im übrigen Formraum 5 liegt. Dadurch wird die an der Güteformhälfte 6 anliegende Oberfläche der Schaumstoffpartikel bzw. des Partikelschaumstoffteils aufgeschmolzen.

Nach dem Heizvorgang wird das Formwerkzeug 2 abgekühlt. Hierzu wird die vom Generator 16 erzeugte elektromagnetische Strahlung und der von der Stromquelle 18 erzeugte Heizstrom abgestellt und Kühlmedium durch die Kühlkanäle 20 des Kühlkörpers 19 geführt. Hierdurch kühlt insbesondere die Güteformhälfte 6 sehr schnell ab, da die metallische Güteformhälfte 6 und der Keramikkörper 7 gute Wärmeleiter sind, so dass über den Kühlkörper 19 schnell Wärme abgeführt werden kann. War während der Heizphase die an der Güteformhälfte 6 angrenzende Oberfläche des Partikelschaumstoffteils aufgeschmolzen, dann erstarrt diese schnell und nimmt exakt die Form der Oberfläche der Güteformhälfte 6 an. Hierdurch wird ein Partikelschaumstoffteil erzeugt, das eine Oberfläche hoher Güte besitzt und sehr exakt komplementär zur Oberfläche der Güteformhälfte 6 ausgebildet ist.

Grundsätzlich kann durch den schichtweisen Aufbau aus der Güteformhälfte 6, dem Keramikkörper 17 und dem Kühlkörper 19 Wärme aus dem Formraum 5 sehr schnell abgeführt werden, wodurch es möglich ist, großflächige und großvolumige Partikelschaumstoffteile effizient herzustellen. Zudem kann ein Temperaturprofil sehr exakt im Partikelschaumstoffteil ausgeführt werden. Hierdurch ist es möglich, Partikelschaumstoffteile aus Kunststoffmaterialien herzustellen, welche sehr spezifische Temperaturanforderungen besitzen.

Weiterhin können in einer solchen Vorrichtung die Schaumstoffpartikel auf hohe Temperaturen von beispielsweise über 150°C, über 190°C, über 200°C und insbesondere über 250°C erhitzt werden. Hierdurch können Kunststoffmaterialien verwendet werden, welche erst bei hohen Temperaturen schmelzen und dementsprechend temperaturstabil sind. Die hieraus hergestellten Partikelschaumstoffteile besitzen eine entsprechend hohe Temperaturstabilität und können weiteren Bearbeitungsschritten unterzogen werden, bei welchen sie hohen Temperaturen ausgesetzt sind, welche Schaumstoffpartikel aus Polystyrol oder Polypropylen nicht widerstehen könnten.

Nach dem Abkühlen der Werkzeugform werden die beiden Formhälften 6, 7 ein Stück auseinandergefahren und das fertige Partikelschaumstoffteil entnommen.

Nachfolgend wird ein zweites Ausführungsbeispiel einer Vorrichtung 1 zur Herstellung eines Partikelschaumstoffteils erläutert. Gleiche Teile sind mit den gleichen Bezugszeichen wie im ersten Ausführungsbeispiel versehen. Sofern im Folgenden hierzu nichts anderes angegeben ist, gelten die Ausführungen zum ersten Ausführungsbeispiel gleichermaßen für die gleichen Teile des zweiten Ausführungsbeispieles.

Die Vorrichtung 1 zur Herstellung eines Partikelschaumstoffteils umfasst wiederum ein Formwerkzeug 2, einen Materialbehälter (nicht dargestellt) und eine Leitung (nicht dargestellt), die vom Materialbehälter zum Formwerkzeug 2 führt. Das Formwerkzeug 2 weist zwei Formhälften 7/1 und 7/2 auf, welche jeweils aus Kunststoff ausgebildet sind. Sie können jeweils aus einem monolithischen Kunststoffkörper ausgebildet sein. Bevorzugt bestehen sie jedoch aus unterschiedlichen Kunststoffkörpern. Beispielsweise kann die an einen Formraum 5 angrenzende Oberfläche aus einem elektromagnetische Wellen absorbierenden Kunststoffmaterial und der übrige Bereich der Formhälften 7/1, 7/2 aus einem elektromagnetische Wellen nicht absorbierenden Material ausgebildet sein. Hierdurch werden die Formhälften 7/1, 7/2 beim Anlegen von elektromagnetischen Wellen an ihren an den Formraum 5 angrenzenden Randbereichen erhitzt.

Bei diesem Ausführungsbeispiel ist an beide Formhälften 7/1, 7/2 jeweils ein Keramikkörper 17/1, 17/2 gekoppelt. Die Keramikkörper 17/1, 17/2 sind genauso wie der Keramikkörper 17 des ersten Ausführungsbeispiels ausgebildet und mit einer Stromquelle 18 verbunden. Durch Anlegen eines entsprechenden Stromes können die Keramikkörper 17/1, 17/2 mittels Widerstandsheizung erhitzt werden. Im vorliegenden Ausführungsbeispiel ist eine gemeinsame Stromquelle 18 für beide Keramikkörper 17/1, 17/2 vorgesehen. Es können jedoch auch zwei unabhängige Stromquellen vorgesehen werden, sodass die beiden Keramikkörper 17/1, 17/2 unabhängig voneinander erhitzt werden können.

An den von den Formhälften weg weisenden Seiten der Keramikkörper 17/1, 17/2 ist jeweils ein Kühlkörper 19/1, 19/2 mit Kühlkanälen 20 angeordnet. Die Kühlkörper sind genauso wie beim ersten Ausführungsbeispiel ausgebildet. Die Kühlkörper sind aus einem elektrisch leitenden Material, wie z. B. Aluminium oder Kupfer oder einer entsprechenden Metalllegierung ausgebildet. Die Kühlkörper 19/1, 19/2 sind mit einem Generator 16 verbunden. Der Generator 16 ist zum Erzeugen von RF-Strahlung mit einer Frequenz von 27,12 MHz ausgebildet. Die Kühlkörper 19/1, 19/2 fungieren somit als Kondensatorplatten, um ein elektromagnetisches Feld am Formraum 5 anzulegen.

Das zweite Ausführungsbeispiel kann in gleicher Weise wie das erste Ausführungsbeispiel verwendet werden.

Bei dem vorliegenden zweiten Ausführungsbeispiel sind die Kühlkörper 19/1, 19/2 mit Bezug zum Formraum 5 außerhalb der Keramikkörper 17/1, 17/2 angeordnet. Im Rahmen der Erfindung ist es möglich, dass die Anordnung der Kühlkörper und der Keramikkörper auch getauscht werden kann, sodass der Kühlkörper näher zum Formraum 5 als der jeweilige Keramikkörper angeordnet ist. Ist der Keramikkörper näher am Formraum angeordnet, dann kann das Aufheizen der Schaumstoffpartikel schneller erfolgen, als wenn der Keramikkörper außerhalb des Kühlkörpers angeordnet ist. Ist der Kühlkörper näher als der Keramikkörper am Formraum 5 angeordnet, dann kann das Abkühlen des Formraumes schneller erfolgen als wenn der Kühlkörper außerhalb des Keramikkörpers angeordnet ist. Je nachdem, ob es wichtiger ist, dass das Heizen der im Formraum 5 befindlichen Schaumstoffpartikel oder das Kühlen schneller erfolgen soll, ist der Keramikkörper oder der Kühlkörper näher am Formraum 5 anzuordnen.

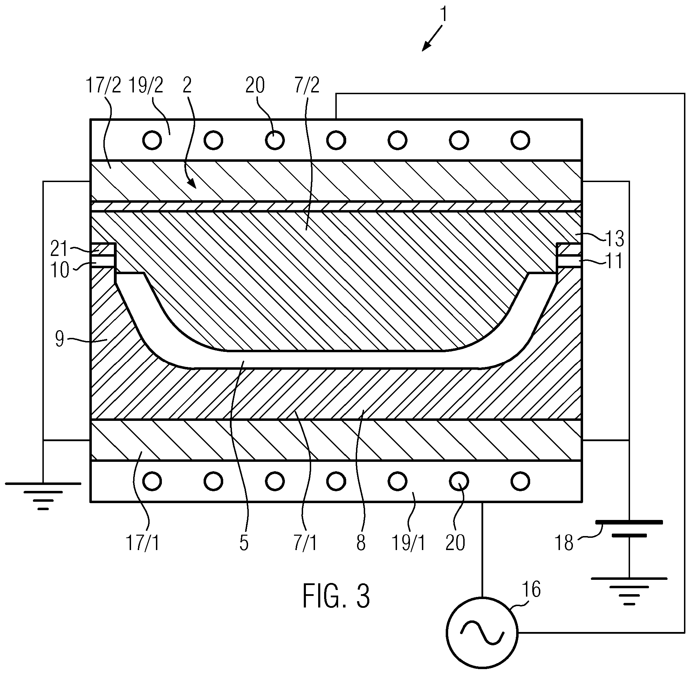

Grundsätzlich gilt, dass die Figuren 1 bis 3 keine maßstabgetreue Darstellung sind. Sind die Formhälften aus Kunststoff ausgebildet, dann ist es vorteilhaft, dass die Formhälften möglichst dünnwandig sind, sodass der Wärmeleitweg zwischen dem Formraum 5 und dem Keramikkörper möglichst kurz ist.

Die Keramikkörper des vorliegenden Ausführungsbeispiels weisen jeweils eine integrierte Widerstandsheizleitung auf. Die Keramikkörper sind in ihrem Umfangsbereich isolierend ausgebildet, sodass die Widerstandsheizleitung gegenüber den benachbarten Kühlkörpern elektrisch isoliert sind. Falls der gesamte Keramikkörper elektrisch leitend ausgebildet ist, dann kann es auch zweckmäßig sein, eine separate Isolationsschicht zwischen dem Kühlkörper und dem Keramikkörper vorzusehen.

In einer weiteren alternativen Ausführungsform kann der oder können die Keramikkörper auch die entsprechenden Formhälften ausbilden. Die Keramikkörper sind dann an einer Seite entsprechend dem herzustellenden Partikelschaumstoffteil komplementär geformt.

Die Kühlkörper 19/1, 19/2, welche mit dem Generator 16 verbunden sind, können mit Wasser gekühlt werden, das als Kühlmittel durch die Kühlkanäle 20 geführt wird. Es kann jedoch auch zweckmäßig sein, Kühlmedien auf Ölbasis zu verwenden, welche elektrisch isolierend sind, um elektrische Ladungen nicht in unerwünschter Weise abzuleiten.

### Bezugszeichenliste

- 1: Vorrichtung
- 2: Formwerkzeug
- 3: Materialbehälter
- 4: Leitung
- 5: Formraum
- 6: Formhälfte (Güte-)
- 7: Formhälfte (Funktions-)
- 8: Bodenwandung
- 9: Seitenwandung
- 10: Durchgangsöffnung
- 11: Durchgangsöffnung
- 12: Gütefläche
- 13: Kragen
- 15: Kondensatorplatte
- 16: Generator
- 17: Keramikkörper
- 18: Stromquelle
- 19: Kühlkörper
- 20: Kühlkanal
- 21: freier Rand

## Patentansprüche

1. Vorrichtung zur Herstellung eines Partikelschaumstoffteils umfassend
ein Formwerkzeug (2) zum Begrenzen eines Formraumes (5) zur Aufnahme von Schaumstoffpartikeln und eine Heizeinrichtung (16, 17) zum Verschweißen der Schaumstoffpartikel zu einem Partikelschaumstoffteil,
wobei
die Heizeinrichtung einen Generator (16) zum Beaufschlagen des Formraums (5) mit elektromagnetischen Wellen umfasst, **dadurch gekennzeichnet, dass** die Heizeinrichtung weiterhin einen Keramikkörper (17) mit einer integrierten Widerstandsheizung umfasst,
wobei die Widerstandsheizleitung aus leitenden oder halbleitenden Keramikkomponenten ausgebildet ist.

2. Vorrichtung nach Anspruch 1, **dadurch gekennzeichnet, dass** an den Keramikkörper (17) ein Kühlkörper (19) gekoppelt ist, welcher Kanäle aufweist, durch welche ein Kühlmedium geführt werden kann.

3. Vorrichtung nach Anspruch 1 oder 2, **dadurch gekennzeichnet, dass** das Formwerkzeug (2) zwei Formhälften (6, 7) aufweist, wobei an eine Formhälfte (6) der Keramikkörper (17) gekoppelt ist oder der Keramikkörper (17) die eine Formhälfte (6) ausbildet.

4. Vorrichtung nach Anspruch 3, **dadurch gekennzeichnet, dass** die andere Formhälfte (7) aus einem Kunststoffkörper ausgebildet ist und eine Kondensatorplatte (15) benachbart zur Formhälfte (7) angeordnet ist, wobei der Kunststoffkörper aus Materialien mit unterschiedlicher Permittivität und/oder einer variierenden Dicke versehen ist und/oder die Kondensatorplatte (15) konturiert ausgebildet ist, um das elektrische Feld der elektromagnetischen Wellen zu formen.

5. Vorrichtung nach einem der Ansprüche 3 oder 4,
**dadurch gekennzeichnet,**
**dass** die Formhälfte (6), an welche der Keramikkörper (17) gekoppelt ist, aus Metall ausgebildet ist.

6. Vorrichtung nach Anspruch 1 oder 2,
**dadurch gekennzeichnet,**
**dass** das Formwerkzeug (2) zwei Formhälften (7/1, 7/2) aufweist, wobei beide Formhälften (7/1, 7/2) an einen solchen Keramikkörper (17/1, 17/2) gekoppelt sind oder zwei Keramikkörper (17/1, 17/2) jeweils eine der Formhälften ausbilden.

7. Vorrichtung nach einem der Ansprüche 1 bis 6,
**dadurch gekennzeichnet,**
**dass** zwei Kühlkörper (19/1, 19/2) aus einem elektrisch leitenden Material vorgesehen sind, welche mit dem Generator (16) zum Beaufschlagen des Formraums (5) mit elektromagnetischen Wellen verbunden sind.

8. Vorrichtung nach einem der Ansprüche 1 bis 7,
**dadurch gekennzeichnet,**
**dass** die leitenden oder halbleitenden Keramikkomponenten aus metallähnlichen Carbiden oder Nitriden oder Siliziumcarbid, Borcarbid oder Titansuboxid ausgebildet sind.

9. Vorrichtung nach einem der Ansprüche 1 bis 8,
**dadurch gekennzeichnet,**
**dass** das Formwerkzeug (2) ein Crackspalt-Formwerkzeug ist.

10. Verfahren zur Herstellung eines Partikelschaumstoffteils umfassend
Füllen eines in einem Formwerkzeug (2) ausgebildeten Formraumes (5) mit Schaumstoffpartikel,
Verschweißen der Schaumstoffpartikel zu einem Partikelschaumstoffteil,
Abkühlen des Partikelschaumstoffteils und
Entformen des Formwerkzeuges (2), wobei die Schaumstoffpartikel durch Beaufschlagen mit elektromagnetischen Wellen erhitzt werden, **dadurch gekennzeichnet, dass** die Schaumstoffpartikel ebenfalls mittels eines Keramikkörpers (17) mit einer integrierten Widerstandsheizleitung aus leitenden oder halbleitenden Keramikkomponenten erhitzt werden.

11. Verfahren nach Anspruch 10,
**dadurch gekennzeichnet,**
**dass** das Heizen mittels des Keramikkörpers (17) und durch Beaufschlagen mit elektromagnetischen Wellen gleichzeitig erfolgt.

12. Verfahren nach Anspruch 10 oder 11,
**dadurch gekennzeichnet,**
**dass** die Schaumstoffpartikel auf eine Temperatur von zumindest 150°C und insbesondere zumindest 190°C und vorzugsweise zumindest 200°C erhitzt werden.

13. Verfahren nach einem der Ansprüche 10 bis 12,
**dadurch gekennzeichnet,**
**dass** eine Vorrichtung nach einem der Ansprüche 1 bis 9 verwendet wird.

## Claims

1. A device for producing a particle foam part, comprising
a molding tool (2) for delimiting a molding space (5) for receiving foam particles, and a heating device (16, 17) for welding the foam particles to form a particle foam part,
wherein
the heating device comprises a generator (16) for applying electromagnetic waves to the molding space (5), **characterized in that** the heating device further comprises a ceramic body (17) having an integrated resistance heating unit,
wherein the resistance heating conductor is made of conductive or semiconductive ceramic components.

2. The device according to claim 1,
**characterized in that**
a heat sink (19) is coupled to the ceramic body (17), which heat sink has channels through which a cooling medium can be carried.

3. The device according to claim 1 or 2,
**characterized in that**
the molding tool (2) has two molding tool halves (6, 7), the ceramic body (17) being coupled to one molding tool half (6) or the ceramic body (17) forming the one molding tool half (6).

4. The device according to claim 3,
**characterized in that**
the other molding tool half (7) is formed of a plastic body and a capacitor plate (15) is arranged adjacent to the molding tool half (7), the plastic body being composed of materials having different permittivity and/or a varying thickness and/or the capacitor plate (15) being contoured in order to shape the electric field of the electromagnetic waves.

5. The device according to any of the claims 3 or 4,
**characterized in that**
the molding tool half (6), to which the ceramic body (17) is coupled, is formed of metal.

6. The device according to claim 1 or 2,
**characterized in that**
the molding tool (2) has two molding tool halves (7/1, 7/2), both molding tool halves (7/1, 7/2) being coupled to such a ceramic body (17/1, 17/2) or two ceramic bodies (17/1, 17/2) forming one of the molding tool halves in each case.

7. The device according to any of the claims 1 to 6,
**characterized in that**
two heat sinks (19/1, 19/2) made of an electrically conductive material are provided, which are connected to the generator (16) for applying electromagnetic waves to the molding space (5).

8. The device according to any of the claims 1 to 7,
**characterized in that**
the conducting or semiconducting ceramic components are formed from metal-like carbides or nitrides or silicon carbide, boron carbide or titanium suboxide.

9. The device according to any of the claims 1 to 8,
**characterized in that**
the molding tool (2) is a crack-gap molding tool.

10. A method for producing a particle foam part, comprising
filling a molding space (5) formed in a molding tool (2) with foam particles,
welding the foam particles to form a particle foam part,
cooling the particle foam part, and
demolding the molding tool (2),
wherein the foam particles are heated by exposure to electromagnetic waves, **characterized in that** the foam particles are also heated by means of a ceramic body (17) having an integrated resistance heating conductor made of conductive or semiconductive ceramic components.

11. The method according to claim 10,
**characterized in that**
the processes of heating by means of the ceramic body (17) and by exposure to electromagnetic waves are carried out simultaneously.

12. The method according to claim 10 or 11,
**characterized in that**
the foam particles are heated to a temperature of at least 150°C and in particular at least 190°C and preferably at least 200°C.

13. The method according to any of the claims 10 to 12,
**characterized in that**
a device according to any of the claims 1 to 9 is used.

## Revendications

1. Dispositif de fabrication d'un élément en mousse particulaire expansée comprenant
un outil de formage (2) destiné à délimiter un espace de formage (5) destiné à recevoir des particules de mousse et un dispositif de chauffage (16, 17) destiné à assembler par soudage les particules de mousse en un élément en mousse particulaire,
sachant que le dispositif de chauffage comprend un générateur (16) destiné à alimenter l'espace de formage (5) en ondes électromagnétiques, **caractérisé en ce que** le dispositif de chauffage comprend en outre un corps en céramique (17) avec un chauffage par résistance intégré,
sachant que la conduite de chauffage par résistance est constituée par des composants en céramique conducteurs ou semiconducteurs.

2. Dispositif selon la revendication 1,
**caractérisé en ce que**
un corps de refroidissement (19), lequel présente des canaux par lesquels un fluide de refroidissement peut être conduit, est couplé au corps en céramique (17).

3. Dispositif selon la revendication 1 ou 2,
**caractérisé en ce que**
l'outil de formage (2) présente deux moitiés de forme (6, 7), sachant que le corps en céramique (17) est couplé à une moitié de forme (6) ou le corps en céramique (17) constitue l'une moitié de forme (6).

4. Dispositif selon la revendication 3,
**caractérisé en ce que**
l'autre moitié de forme (7) est constituée par un corps en matière plastique et une plaque de condensateur (15) est disposée de manière adjacente à la moitié de forme (7), sachant que le corps en matière plastique est composé de matériaux à permittivité différente et/ou ayant une épaisseur variable et/ou la plaque de condensateur (15) est constituée de manière profilée pour former le champ électrique des ondes électromagnétiques.

5. Dispositif selon l'une des revendications 3 ou 4,
**caractérisé en ce que**
la moitié de forme (6) à laquelle le corps en céramique (17) est couplé est constituée par du métal.

6. Dispositif selon la revendication 1 ou 2,
**caractérisé en ce que**
l'outil de formage (2) présente deux moitiés de formage (7/1, 7/2), sachant que les deux moitiés de formage (7/1, 7/2) sont couplées à un tel corps en céramique (17/1, 17/2) ou deux corps en céramique (17/1, 17/2) constituent respectivement une des moitiés de formage.

7. Dispositif selon l'une des revendications 1 à 6,
**caractérisé en ce que**
deux corps de refroidissement (19/1, 19/2) composés d'un matériau électriquement conducteur sont prévus, lesquels sont reliés au générateur (16) destiné à alimenter l'espace de formage (5) en ondes électromagnétiques.

8. Dispositif selon l'une des revendications 1 à 7,
**caractérisé en ce que**
les composants en céramique conducteurs ou semi-conducteurs sont constitués par des carbures ou nitrures similaires à du métal ou par du carbure de silicium, du carbure de bore ou du suboxyde de titane.

9. Dispositif selon l'une des revendications 1 à 8,
**caractérisé en ce que**
l'outil de formage (2) est un outil de formage à fente de craquage.

10. Procédé de fabrication d'un élément en mousse particulaire expansée comprenant
le remplissage d'un espace de formage (5) constitué dans un outil de formage (2) avec des particules de mousse,
l'assemblage par soudage des particules de mousse en un élément en mousse particulaire, le refroidissement de l'élément en mousse particulaire, et
le démoulage de l'outil de formage (2),
sachant que les particules de mousse sont chauffées par alimentation en ondes électromagnétiques, **caractérisées en ce que** les particules de mousse sont également chauffées moyennant un corps en céramique (17) avec une conduite de chauffage par résistance intégrée composée de composants en céramique conducteurs ou semiconducteurs.

11. Procédé selon la revendication 10,
**caractérisé en ce que**
les processus de chauffage moyennant le corps céramique (17) et par alimentation en ondes électromagnétiques sont effectués simultanément.

12. Procédé selon la revendication 10 ou 11,
**caractérisé en ce que**
les particules de mousse sont chauffées à une température d'au moins 150 °C et en particulier d'au moins 190 °C et de préférence d'au moins 200 °C.

13. Procédé selon l'une des revendications 10 à 12,
**caractérisé en ce que**
un dispositif selon l'une des revendications 1 à 9 est employé.
